# EUROPEAN PATENT SPECIFICATION

(11) **EP 3 342 643 B1**
(45) Date of publication and mention of the grant of the patent: **27.03.2024**
(21) Application number: 17209110.0
(22) Date of filing: 20.12.2017
(51) Int. Cl.: B60Q 1/26, B60Q 1/38, B60Q 1/24, B60Q 1/12, B60Q 3/50, B60Q 1/00

(54) **EXTERIOR REARVIEW DEVICE WITH ILLUMINATION FUNCTIONS**
AUSSENRÜCKBLICKVORRICHTUNG MIT BELEUCHTUNGSFUNKTIONEN
DISPOSITIF DE RÉTROVISEUR EXTÉRIEUR AVEC FONCTIONS D'ÉCLAIRAGE

(30) Priority: 27.12.2016 US 201615391026
(43) Date of publication of application: 04.07.2018
(73) Proprietor: SMR Patents S.à.r.l., 2453 Luxembourg (LU)
(72) Inventor: FRITZ, Daniel, 70374 Stuttgart (DE); HERRMANN, Andreas, 71364 Winnenden-Baach (DE); RÖTZER, Ilka, 73770 Denkendorf (DE); MEIER, Eugen, 71245 Ditzingen (DE); SCHMIDT, Oliver, 70329 Stuttgart (DE); WIECZOREK, Romeo, 73732 Esslingen (DE); HEIN, Peter, 73770 Denkendorf (DE); MOASE, Christopher, South Brighton, South Australia 5048 (AU); MC KENZIE, Philip, Clapham, South Australia 5062 (AU); BELCHER, Simon, South Plympton, South Australia 5038 (AU); KÖNIG, Andrea, 73733 Esslingen (DE); DOBRETE, Alexandru, 70329 Stuttgart (DE); CID, Marco, Coromandel Valley, South Australia 5051 (AU); DI FIORE, Adam, Underdale, South Australia 5032 (AU)
(74) Representative: Weber-Bruls, Dorothée

(56) References cited:
- EP-A1- 1 304 260
- EP-A1- 1 564 567
- EP-A1- 2 965 947
- WO-A1-2016/012651
- US-A1- 2005 117 364
- US-A1- 2012 081 915
- US-A1- 2013 107 557
- US-A1- 2013 242 586
- US-A1- 2014 218 946

## Description

This application refers to a vehicle exterior rearview system according to the preamble of claim 1.

There are various systems available today for adaptive lighting of a vehicle. These systems seek to provide dynamic front-lighting, or curve lighting functionality, for a vehicle.

The systems that are currently available typically use mechanical systems to provide the curve lighting functionality. For example, motors, such as stepper motors, may rotate a lens, a reflector, a mount, or a light source of a headlamp, or an entire light module. The stepper motors may receive signals to steer the light beam in horizontal and/or vertical directions. A particular steering angle of the light beam may be defined as a function of vehicle speed and steering wheel angle. In addition, a typical range of rotation of the light beam may be ± 15 degrees left/right and ± 15 degrees up/down. As a result, a roadway may be more effectively illuminated by the curve lighting functionality, thereby increasing safety and comfort.

The Patent Application DE 10 2006 039 182 A1 describes a vehicle having a light radiating device with two or more LED segments, and a control device to vary the emitted radiation intensity of the LED segments.

An adaptive front-lighting system that is referred to as "Pixel Light" has also been proposed. In this system, micro mirror devices each reflect one pixel of a light beam. Further, the light beam is fixed in place but can be programmed to suit the conditions in front of a vehicle. PCT International Published Patent Application No. PCT/IB2007/051355 describes a system that places a liquid crystal element in front of a light source in order to steer the light beam.

A system having at least one semiconductor light source is known from EP 2221219, said semiconductor light source being integrated in a specified position in a daytime running light module of the vehicle. This means that the at least one semiconductor light source is arranged in the daytime running light module in a fixed or stationary position. In order to produce the curve light and/or deflecting light function, the at least one semiconductor light source is not rotated or pivoted, but remains connected to the vehicle.

All of the known solutions for active curve lighting have the disadvantage that an area to the side of the vehicle cannot be illuminated due to the mounting position of the headlamp.

US 2012/0081915 to Foote, et al, discloses a vehicle exterior mirror having auxiliary lighting modules used optionally for various lighting functions including, for example, a turn signal indication of intent to turn, additional front and side lighting in the event of a turning steering angle or turn signal activation, reverse lighting in the event of engaging reverse gear, and a security or "puddle" light directed downwardly adjacent the side of the vehicle. In some variations, a user may exert some control over the lighting modules or functions via dashboard controls or by use of a key or remote key fob.

US 2011/273671 to Chu discloses a projector for lighting a vehicle side or displaying a "sign" adjacent the vehicle. In one embodiment, the projector is located on a side-view mirror. The projector is turned on to project a sign on the ground in an area beside the vehicle 4 and light up the area, with the door closed. The sign is determined by the pattern or mask integrated within the projector.

EP 2 740 632 discloses a lateral rearview mirror system for a vehicle and a corresponding application program product for operating the lateral rearview mirror system. The rearview system comprises a projector such as a laser beamer for projecting an image to the environment of the vehicle. This way, an enhanced visual presentation and communication of information is achieved.

US 2014/218946 A1 discloses a short-range cornering light in the exterior mirror of a vehicle,which contains at least one lighting unit that comprises at least onemirror blinker, wherein the lighting unit contains meansfor illuminating a short-range area that extends at least alongside thevehicle and in front of the exterior mirror in the driving direction,wherein the means can be activated below a threshold speed of thevehicle.

EP 1 304 260 A1 relates to a rear-view mirror for vehicles, which consist of compatible, combinable and exchangeable modules such as: (A) and (B), or integrated (A+B), functional, signal, lighting and sensor modules; and structural (C), (D) and (E) modules; cover-housing, body-housing and support which may include functional modules. (A), (B) and (A+B) fulfill their function even if the rear-view mirror is folded. They use a multifocal light source of LED's inserted into a flexible and orientable circuit and/or a mixed rigid-flexible circuit combining LED's bulbs and other lighting elements, with variable optical and reflective means enabling more than one signal from one same transparent surface with direct light output, indirect-reflected light output and/or through intermediate optical light guides depending on the directions required in the front, the side, the back and the lateral groung for different commands, applications and safety signals.

A vehicle turn signal projector for casting a predetermined image into an area adjacent to the vehicle is known from US 2005/117364 A1 and comprises one or more light sources electrically coupled to a signal indication circuit associated with the vehicle, wherein the one or more light sources generate light energy within a predetermined space when the signal indication circuit is energized; and one or more apertures positioned beneath the one or more light sources configured in a predetermined shape such that light energy passes though the one or more apertures from the one or more light sources and casts an illuminated image into the area adjacent to the vehicle in accordance with the predetermined shape of the one or more apertures.

US 2012/081915 A1 teaches a lighted exterior rearview mirror system suitable for use in avehicle, said lighted exterior rearview mirror system comprising: a lighted exterior rearview mirror assembly; a light module disposed at said lighted exterior rearview mirror assembly, said light module comprising a plurality of illumination sources operable to emit light; and wherein said illumination sources are individually controlled responsive to a user input to provide a customized illumination beam emanating from said exterior rearview mirror assembly.

A lighting system used in a vehicle is known from EP 1 564 567 A1, the lighting system comprising, a light source being placed inside the vehicle; and a light guiding member having two ends, one end of which light from the light source enters, and from the other end of which the light is sent out, the other end being placed in one of an interior and an exterior of the vehicle.

US 2013/107557 A1 describes an exterior door handle assembly suitable for mounting at a door handle region of a vehicle door, said exterior door handle assembly comprising: a handle portion movable to open a vehicle door at which said exterior door handle assembly is mounted, wherein said handle portion has a length dimension and a width dimension, and wherein said length dimension is generally horizontally oriented and said width dimension is generally vertically oriented when said exterior door handle assembly is normally mounted at the door handle region of the vehicle door, and wherein said length dimension is greater than said width dimension; an illumination device, said illumination device comprising at least one illumination source that, when actuated, emits light; wherein said illumination device comprises a lighting strip that is disposed at said handle portion, and wherein said lighting strip extends at least partially along said length dimension of said handle portion; and wherein, when said at least one illumination source is actuated, said lighting strip is illuminated and the illumination is viewable at least partially along said length dimension of said handle portion by a person viewing said handle portion of said exterior door handle assembly from outside of the vehicle door.

From US 2013/242586 a lighted exterior rearview mirror system suitable for use in a vehicle is known, said lighted exterior rearview mirror system comprising: a lighted exterior rearview mirror assembly; a light module disposed at said lighted exterior rearview mirror assembly, said light module comprising a plurality of illumination sources operable to emit light at least in a generally forwardly direction with respect to a vehicle equipped with said lighted exterior rearview mirror system; wherein said illumination sources are controlled responsive to a user input operable by a driver of the equipped vehicle normally operating the equipped vehicle to provide an illumination beam emanating from said exterior rearview mirror assembly; wherein said light module further comprises at least one turn signal indicator illumination source and wherein said turn signal indicator illumination source, at least responsive to an activation of a turn signal by the driver of the equipped vehicle, is operable to emit light at least in a generally sidewardly and rearwardly direction with respect to the equipped vehicle; wherein said light module comprises a light piping element and wherein said turn signal indicator illumination source is disposed at an inboard end of said light piping element and wherein said light piping element guides light emanating from said turn signal indicator illumination source along said light piping element and out an outboard end of said light piping element so that light emanating from said outboard end of said light piping element is viewable to a person viewing said lighted exterior rearview mirror assembly from at least one of a side of the equipped vehicle and a rear of the equipped vehicle; and wherein said inboard end of said light piping element is disposed inside of a mirror casing of said lighted exterior rearview mirror assembly and said outboard end of said light piping element is disposed outside of said mirror casing.

WO 2016/012651 relates to a multifunctional assembly including an external surface structure (CAR) that comprises a side door (D) and is equipped with at least one external rear-view assembly (RVM) and an external handle assembly (HE) for opening the door. An external laser emitter (LE1) is also included which emits a line of laser light line (LL1) in a fixed and direct manner downwards onto the ground adjacent to the vehicle, indicating a door-opening area (DA), and performs functions in a combined manner with other blinkers (BL), sensors and control devices upon opening the door and with an ultraviolet light emitting device (EUV).

EP 1 363 810 A2 teaches an improved lighting system for a vehicle, the vehicle having a battery/ignition voltage, said lighting system comprising: an accessory module assembly adapted for attachment to an interior portion of a vehicle; said accessory module assembly configured to illuminate an area inside the vehicle when said accessory module assembly is attached to said interior portion of the vehicle; said accessory module assembly comprising a single non-incandescent light source for illuminating the area, said single light source comprising a single high-intensity power light emitting diode emitting light for illuminating the area characterized in that the light emitting diode emitting light with a luminous efficiency of at least 1 lumen/watt when said single high-intensity power light emitting diode is operated and wherein said single high-intensity power light emitting diode operated at a forward current of at least 1.00 milliamps and a forward operating voltage less than 5 volts; and a voltage conversion element for converting the battery/ignition voltage of the vehicle to the forward operating voltage of the light emitting diode.

EP 2 965 947 A1 describes a direction indicator module for an outside rearview mirror arrangement for a motor vehicle, with at least one light source, a first light guide comprising a plurality of light decoupling points and a second light guide radiating into a single light output area, wherein the light source couples a first radiation part at a first end into the first light guide and a second radiation part at a first end into the second light guide, and the light output region in a region of the second end of the first light guide lying opposite the first end of the first light guide.

The present invention seeks to further develop the known vehicle exterior rearview system to overcome problems associated with the prior art, by also using additional lighting in the exterior mirror, which may be adaptively controlled.

This is achieved by a vehicle exterior rearview mirror system in line with claim 1. The claims 2 to 9 describe preferred embodiments of the invention.

An adaptive cornering light system for a motor vehicle that may be useful to understand the invention includes an exterior mirror head, housing at least one lighting module that having a plurality of LEDs arranged in sectors to provide different lighting functionalities. One LED or light sector is provided for adaptively illuminating a cornering area that extends along the side of the vehicle toward the front of the exterior mirror head. This "cornering LED" is adaptively activated if the speed of the vehicle is below a threshold speed, or in response to additional optional parameters such as steering angle, turn-signal blinker activation, and running lights activation. Another LED or light sector may be used as a security light to illuminate or display a message on the ground in the door area adjacent the side of the vehicle. Interior lights are also disclosed. User input may also control options for illumination.

A vehicle exterior rearview system useful to understand the invention may comprise:
a housing adapted for mounting to an exterior side of a vehicle, the housing holding at least one of a reflective mirror surface and a display screen for displaying to a driver an image of the area to the side and rear of the vehicle;
one or more lighting modules disposed in said housing and providing at least one first lighting sector for implementing a turn-signal indicator and at least one second lighting sector for implementing one or more of an adaptive cornering light illuminating a forward sector or an adaptive security light illuminating a downward and rearward sector; and
a control system for (a) receiving input data about vehicle status parameters from vehicle status sensors, (b) receiving input data about the vehicle's environment conditions from environmental sensors; and (c) adaptively activating the second lighting sector in response to the input data.

Such a vehicle exterior rearview system has a single LED or light source that is directed to multiple locations via light guides or optical fibers for providing different lighting functions in several directions. The lighting sector functions that may be achieved by the various lighting modules may include a turn signal blinker light, and adaptive cornering light, a daytime running light, a security light, a reverse gear indications, side marker lights, an interior light, or any combination of these.

The exterior rearview system of the present invention has light functions that are adaptive in nature, and are displayed automatically and passively in response to data input received from environmental and vehicle sensors. Suitable user input devices may include a key, a remote key fob, or a smartphone or tablet device. The user may thus control at least one of color, shape, intensity, and timing of lights activated for the security light function in response to user input.

A light module may be provided plus means for illuminating, comprising
- one light source and light guides such as optical fibers and/or
- to direct light to various spots and/or in various colors and/or with various brightness,
- outside and/or inside the vehicle and/or
- to illuminate the ground through rocker panel, bumper, side-camera housing
- for providing logo, messages/alerts, light patterns, keyboard (for opening he car), spot light on user when moving (illuminating path at night).

The invention includes a control system, as defined herein that:
- may receive input data from user (customer/driver) via smartphone (app) or other interface;
- may generate messages/light patterns depending on user identity, daytime, weather conditions...; and/or
- may receive signals from sensor detecting gestures, movement and/or identity of user(s) (pictures detection, detection of key, phone ...), weather condition, approaching objects, etc..

The invention will now be explained by means of example embodiments with reference to the drawings, wherein:
- Fig. 1: is a schematic top view of a lighting distribution using a system for electronic adaptive front-lighting of a vehicle;
- Fig. 2: illustrates the illumination distribution areas of a vehicle;
- Fig. 3: illustrates an example of the illumination distribution areas of an adaptive cornering light that is not part of the invention; light;
- Fig. 4: illustrates the lighting of an external rearview device;
- Fig. 5: illustrates an example embodiment of the illumination distribution areas of the security light; and
- Fig. 6: illustrates a control system of a vehicle exterior rearview system in schematic according to the invention.

Reference to a "first" or a "second" or a "third" element, such as in connection with a first and second lighting sector or light function, is not intended to imply any order, but is simply a label to distinguish one from another.

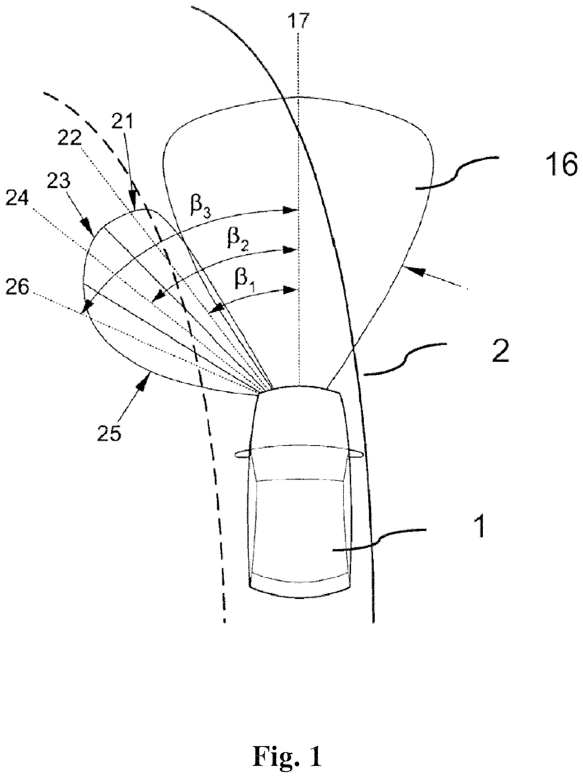

Fig. 1 shows a schematic top view of a lighting distribution using a system for electronic adaptive front-lighting of a vehicle. This figure illustrates a driving situation in which the vehicle 1 is driving along a roadway 2 curving towards the left. In addition, this figure illustrates an example not corresponding to the invention of an electronic adaptive front-lighting system LED module in the headlamp with three different light sectors L1, L2, L3. As used herein, "adaptive" lighting or "adaptively controlled" refers to lighting that changes passively in response to a measured parameter or external stimulus, but not in direct response to control by a user. For example, in the adaptive headlamps mentioned herein, the headlamps change their angle in response to a steering angle change, not in direct response to a user's actions, even though the user is responsible for changing the steering angle by turning a steering wheel. The primary objective of the user is to steer the vehicle and only by a secondary passive or "adaptive" feature do the headlamps turn as well.

As shown in Fig. 1, the low-beam light source projects a standard light distribution 16 having a center axis 17 forward of the vehicle. In addition, the light sectors L1, L2, L3 project beams of light having illumination distributions 21, 23, 25, respectively, and having center axes 22, 24, 26 of said distributions 21, 23, and 25, respectively, at angles β1, β2, β3, respectively, from the center axis 17 of the standard light distribution 16. The light distributions 21, 23, 25 illuminate areas forward and to the left of the vehicle for the driving situation in which the vehicle is driving along a roadway curving towards the left.

Each of the light sectors L1, L2, L3 may be illuminated by one LED, based on the LED type and the amount of light required for each sector. In addition, the light intensity of each of the light sectors may be independently controlled. In this manner, the light distributions 16, 21, 23, 25 may be optimally controlled based on a particular driving situation, such as a vehicle speed, a steering wheel angle, a proximity to other vehicles, a selected driving comfort/behavior pre-programmed, an actuation of an input device such as a switch or any other human-machine interface, or road characteristics such as curvature or width, etc.

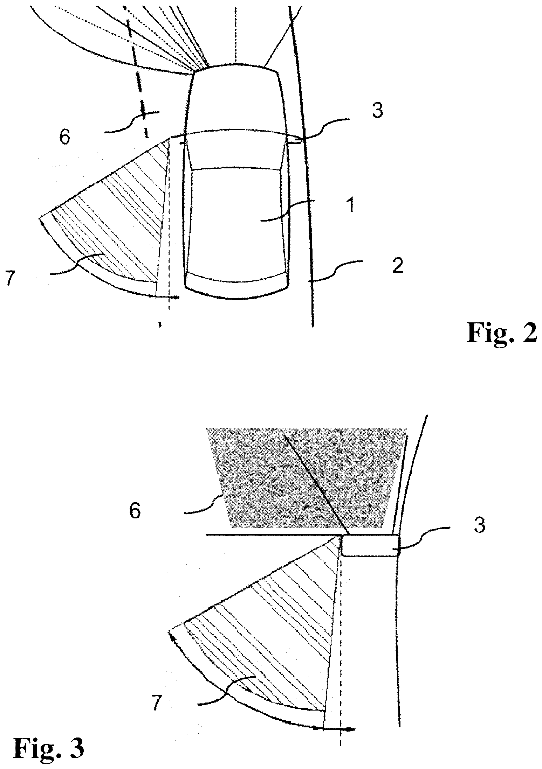

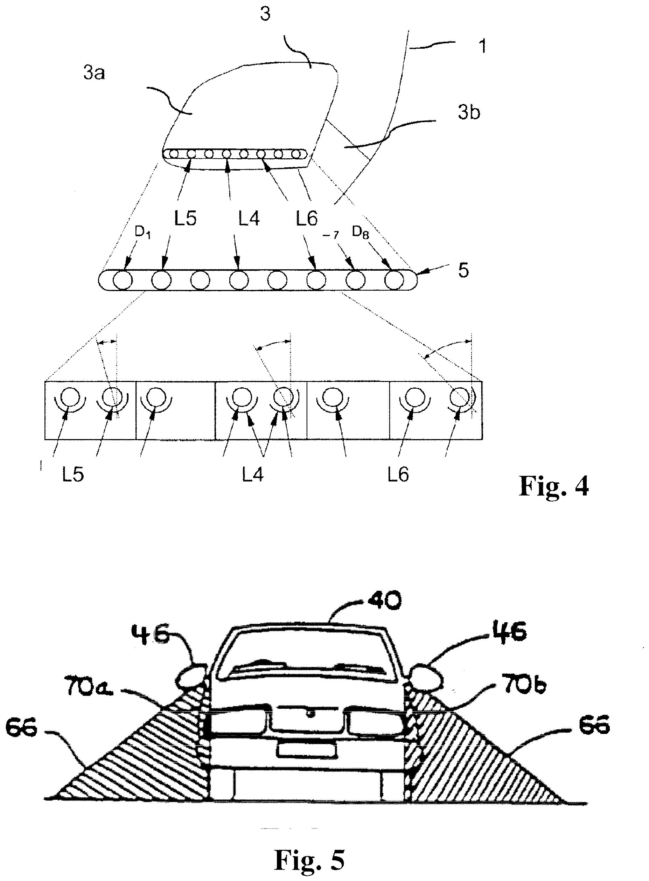

Figure 2 illustrates the area to the left alongside the vehicle 1. Exterior rearview devices 3 are arranged on both sides of the vehicle. The rearview devices 3 comprise one or both of a mirror and a display screen. The rearview devices 3 further include turn-signal blinkers which illuminate the shaded area 7, which extends in a rearward quadrant between 5 degrees from the longitudinal axis of the vehicle and 55 degrees away from it. This illumination may be achieved with the lights or LEDs for outboard light sector L5 (see Fig 4).

The entire area between the illuminated distributions 16, 21, 23 and 25 of the headlamps is not lit up. However, if the vehicle wants to turn, the adaptive feature of the headlamps is not adaptive enough to light up the area of the roadway immediately adjacent to the vehicle side (e.g. area 6). For this purpose, a further light source for light sector L4 is used in the exterior rearview device 3. This light sector L4 illuminates an area 6 which extends at least outwardly from the extension of the exterior mirror or display device 3 to the bodywork contour adjacent the side of the vehicle in front of the rearview device 3, see fig.3.

Fig. 4 illustrates an external rearview device 3 for adaptive lighting of a vehicle. This rearview device 3 consists of a mirror head 3a, which comprises a reflecting element on its side which is not visible in the drawing, and a mirror base 3b with which the exterior mirror is mounted on the vehicle 1. The vehicle 1 is indicated in the drawing with a sketched contour. The exterior mirror 3 contains a lighting module 5 which, in this example, extends along the longitudinal axis of the exterior mirror, which leads away from the vehicle. In this example, the lighting module 5 may include a turn-signal blinker, a side marker light source, an integrated daytime running light (DRL) and an adaptive cornering light.

As shown in this example, the integrated daytime running light (DRL), the turn-signal blinker, and the adaptive cornering light include LEDs D1 to D8 arranged to also provide light sectors L4, L5, and L6. The light sectors L4, L5, L6 contain LEDs, in order to illuminate areas forward and to the left of the vehicle mirror for the driving situation in which the vehicle is driving along a roadway curving towards the left. In this example, the functional light sectors L4 to L6 may each share the same LED location (i.e. D1 to D8) as the functional daytime running lights. As shown in Fig. 4, light sector L5 (e.g. which may provide the turn-signal function) shares the same location as daytime running light LED D2; light sector L4 (e.g. which may provide the adaptive cornering light function) shares the same location as daytime running light LED D4, and light sector L6 shares the same location as daytime running light LED D6, and may provide this functionality.

Further, Fig. 4 schematically illustrates optical elements as semicircular elements. The optical elements are utilized to direct the light of each DRL LED and each cornering light LED in a particular direction. The optical elements include reflectors, lenses, etc.

The number of light sectors Lx may be varied, and the arrangement of the light sectors Lx may also be varied, such as horizontally, vertically, diagonally, in a straight line, in a curved line, etc.

Furthermore, for any given light functionality (such as turn signal blinker, adaptive cornering light, daytime running light (DRL), side marker light, reverse gear indication, or security ground light) the illumination is supplied by LED or light source, depending on the complexity desired. As a single light source is used for any given light functionality, the light is distributed more evenly and broadly by the use of elements such as diffusers, lenses, optical fibers, light guides or wave guides, and/or reflectors. This has a benefit of simpler manufacturing and maintenance of light sources like LEDs, and can still accomplish color and/or intensity variations at the output by means of filters, lenses, or diffusers.

In another example, the lighting module 5 in mirror 3 only contains a turn-signal blinker and an adaptive cornering light. As a result, only two light sectors are defined, but both may, in each case, contain light sources for the other function respectively. Since the blinking function must emit amber-colored light, the LED which performs the blinking function are provided only for this specific function.

Since it only makes sense to use the cornering light during sharp turning maneuvers in dim lighting situations, it is expedient to couple the activation of the adaptive cornering light with environmental and vehicle parameters and, in particular, with the daylight levels and vehicle speed. For example, it makes sense to activate the adaptive cornering light in the exterior mirror only below a threshold speed. Other environmental parameters that might be relied upon to activate the adaptive lighting include fog, rain, snow, sleet, cloudy or overcast conditions, and darkness or twilight. Other vehicle parameters that might be relied upon to activate the adaptive lighting include vehicle speed (below a threshold), steering angle (above a threshold), activation of turn indicator signaling an intentions to turn, and activation of daytime running light and/or headlights.

The lighting module 5 is controlled by means of a control system in the door or a controller in the exterior rearview device, which receives data via a bus system. Input data is fed into the control unit. Said input data includes vehicle data such as, for example, vehicle speed, steering wheel angle, and environmental data, such as road characteristics, illumination levels, weather, etc. The control unit then controls each of the adaptive light sectors Lx of the left and right lighting module, independently of each other, to turn on or off each of the LED light sectors and/or to vary their light intensity.

A useful control system is obtained, if the following vehicle parameters are met:
- The vehicle is stationary or only moving at low speed, for example up to 30 km/h.
- The turn signal is activated
- And the running light is on.
- The steering angle is greater than a threshold value.

This set of parameters defines a sharp turn at low speed in poor visibility and results in the adaptive cornering light being activated.

According to the invention, a security light function is provided. A security light is also known in the literature as a "puddle light" and generally illuminates one or both sides (70a, 70b) of a vehicle 40 near the doors (see Fig 5 ). Security lights have been provided in rearview mirrors 46 and are directed downwards and slight rearwards to illuminate an area 66 and the ground adjacent the side of the vehicle 40. Lighting sector L7 (not shown), may be disposed in the bottom side of a rearview device 3 and may be used to illuminate area 66. The lighting sector L7 may comprise one or more LEDs or light sources and the illumination may be diffused or directed by optical fibers, lenses, light guides, reflectors, etc. as with any of the other light sectors. In alternative examples not being part of the invention, security lights may be installed in rocker panels, fenders, doors or other exterior locations of the vehicle.

Although the security light sector L7 is generally used when the vehicle is stationary, it may also be linked to the turn signal indicator in order to display an arrow or other warning signal along the ground adjacent the vehicle to signal to approaching vehicles or bicycles that the equipped vehicle is about to make a turn procedure.

In an alternative embodiment, an interior lighting function may be provided by one or more light sectors L8. Light sectors L8 are housed in the rearview device 3.

In some embodiments, both the security lighting function L7 and the interior lighting function L8 may be "adaptive" to vehicle or environmental conditions. For example, upon sensing an entry remote within a defined proximity at night, a security light may automatically illuminate to direct the user to the vehicle for entry. Interior lighting may operate in a similar manner if desired. According to the invention, the illumination of the security light sector is configured to contain a message such as an alert or warning. The message may be selected by a vehicle controller module based on environmental and/or vehicle status conditions. In this case, the message may include an alert such as a weather alert to advise the driver as to fog, snow, sleet, ice or other adverse or dangerous driving conditions. In other situations, the message may be a vehicle status alert such as one warning of low tire pressure or low oil or coolant levels, or a need for service. Alternatively, the message may be a logo or graphic design selected by the vehicle manufacturer or by the user. The use of images or messages displayed in the illumination area 66 may be accomplished by suitable light sources and patterns or masks that project the message or graphic to the ground area. Patent publications US 2011/273671, US 2010/253919, and EP 2 740 632 A1 illustrate and describe technology for displaying messages and logos by means of a lighting system such as described above for sector L7.

According to the invention, the security light can be controlled and customized by the user. For example, the nature of the illumination (color, intensity, content, etc.) may be selected and/or customizable by the user of the vehicle. Some users may prefer red or blue (or any other color) illumination over amber or white. The message may be a greeting, such as "Hello" or "Welcome" and may even be customizable to include the user's name if desired. Whether a message is adaptive or user-controlled, it may be the same or different on each side of the vehicle.

In yet another embodiment, a lighting sector L9 may be used to display a message on a window or door area near the entry handle. Sector L9 may be used to display a message, much like that of the security light sector L7. However an alternative use of lighting sector L9 is to provide an identity confirmation prior to admitting the user. For this function, L9 may display a virtual key pad for the user to enter a passcode to unlock the vehicle. US 2006/614582 describes such a system. Lighting sector L9 may also be used to confirm identity through a "swipe pattern" as is common on smartphones, or through an image recognition system as is described in US 2010/085147 or a gesture recognition. Finally, lighting sector L9 may be used to assess the sobriety of a user by means of a reflex test in which the user must, within a predetermined time limit, repeat a displayed pattern of lights, object or numerals, much like the Hasbro game "SIMON."

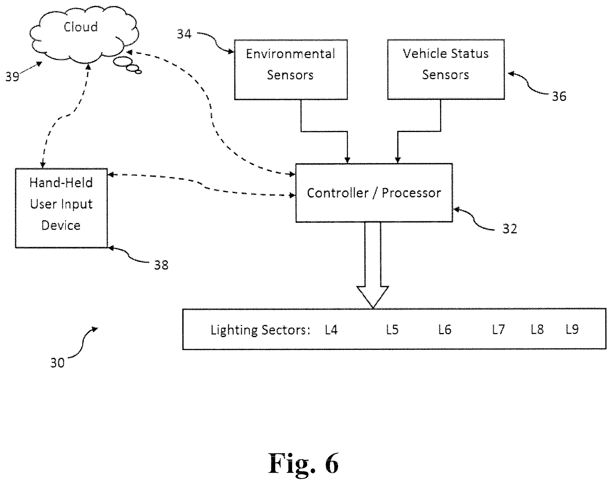

Customization and control of lighting functions (e.g. L7 and L8) may be accomplished by conventional controller electronics such as is currently employed by GM's "Onstar" and Verizon's "HUM" systems. These may use a plug in module or hard wired module having wireless transmitter and receiver functions for communicating with a hand-held user device, such as key fob or smartphone, for example. Figure 6 illustrates a simple schematic for a representative control system 30. The brain of the control system is a computer controller or processor 32 that receives data inputs from the environmental sensors 34 and the vehicle sensors 36. As mentioned previously, the environmental sensors 34 detect conditions of light or darkness, rain, snow, fog, sleet, road conditions, proximity of a potential driver/user, or proximity an adjacent vehicle, etc. and feed this data to the controller 32. The vehicle sensors 36 detect status conditions of the vehicle itself, such as vehicle speed, steering angle, activation of lights (day time running or headlamp), activation of turn signal indicators, activation of hazard flasher lights, engine temperature, engine rpms, engine computer fault detections, oil pressure or life, tire pressure, etc. and feed these to the controller 32.

In the case of adaptive lighting controls, the processor uses this sensor input to determine which lighting sectors (L4 to L8) to activate, such as the adaptive cornering light sector L4 described above, the turn signal indicator light sector L5, the security light sector L7, or the interior lighting sector L8.

In the case of user customized lighting controls, the controller 32 may receive additional input signals from a remote, hand-held device 38 operated by the user. The hand-held user device 38 may be a smartphone having a suitable "app" or a remote key fob adapted to provide special inputs, such as by selecting a mode from a menu and then using up/down or right/left arrows to select the option for each mode, much like a certain camera menus. These control signals are shown in dashed lines in Fig. 6 to indicate that they are wirelessly conveyed, such as by a WiFi link or a Bluetooth^{™} technology. The user's hand-held device 38 may communicate directly with the receiver of the controller 32. According to the invention, a communication with an application "in the cloud" 39 such as is done with "Onstar" or "Hum," is established and the "cloud" application then communicates with the controller 32 to deliver the signals.

As noted previously some of the user selected inputs may include any or all of the following:
- Whether to enable of disable any particular feature or function;
- Whether to display any message via a security light sector L7;
- What message to display, in the event a message is selected;
- What lighting characteristics (e.g. colors, shapes, and/or intensities) to use for both the interior lighting sector L8 and the security lighting sector L7.

### Reference signs

- 1: vehicle
- 2: roadway
- 3: rearview devices
- 3a: mirror head
- 3b: mirror base
- 5: lighting module
- 6: area
- 7: area
- 16: light distribution
- 17: center axis
- 21: illumination distribution
- 22: center axis
- 23: illumination distribution
- 24: center axis
- 25: illumination distribution
- 26: center axis
- 30: control system
- 32: computer controller or processor
- 34: environmental sensors
- 36: vehicle sensors
- 38: hand-held device
- 39: cloud
- 40: vehicle
- 46: rearview mirrors
- 66: illumination area
- 70a, 70b: vehicle sides

- D1 to D8: LEDs
- L 1, L2, L3: light sectors
- L4, L5, L6: light sectors
- L7, L8, L9: light sectors
- β1, β2, β3: angles

## Claims

1. A vehicle exterior rearview system (3, 46) comprising:
• a housing adapted for mounting to an exterior side (70a, 70b) of a vehicle (1, 40), the housing holding at least one of a reflective mirror surface and a display screen for displaying to a driver an image of the area to the side and rear of the vehicle;
• one or more lighting modules (5) disposed in and secured to said housing and providing at least one first lighting sector (L1 - L9) for implementing a turn-signal indicator and at least one second lighting sector (L1 - L9) for implementing additional illumination to the outside or inside of a vehicle (1, 40), the second lighting sector being adaptively controlled; and
• a control system (30) for
receiving data input concerning:
(a) vehicle status parameters from vehicle status sensors (36); and
(b) the vehicle's environment conditions from environmental sensors (34); and
(c) a user's intentions from a user input device (38); and
for adaptively activating the second lighting sector (L1 - L9) in response to the data input,
wherein
the second lighting sector is an adaptive security light configured to display a message or an alert responsive to the data input received by the control system (30) from the vehicle status sensors and the environmental sensors,
the control system (30) further includes a computer controller or a processor (32) for receiving the data input from the environmental sensors (34) detecting road conditions or proximity of an adjacent vehicle and from the vehicle status sensors (36) detecting vehicle status parameters, and
the user input device (38) is a user's hand-held device,
**characterized in that** the system is adapted such that
the hand-held device communicates with an application "in the cloud" (39) and the "cloud" application then communicates with the controller (32) to deliver the user's intention signals, wherein the second lighting sector displays the illumination or the message responsive to the user's intention signals.

2. The exterior rearview system according to claim 1, wherein at least one lighting module (5) contains a plurality of LEDs (D1 - D8) arranged in the lighting sectors (L1 - L9) for providing different lighting functions.

3. The exterior rearview system according to claim 1, wherein
at least one lighting module contains a single light source and a light guide for directing light from the light source to one or more output points.

4. The exterior rearview system according to any one of the preceding claims, wherein the control system (30) controls at least one of color, shape, intensity, and timing of lights activated for the second light sector in response to the user input.

5. The exterior rearview system according to any one of the preceding claims, wherein the computer controller or processor (32) receives the data input from the environmental sensors (34) relating to an identity of the user.

6. The exterior rearview system according to claim 5, wherein
the input relating to the identity of the user is selected from picture recognition, gesture recognition, key input recognition, and proximity of a detected user device.

7. The exterior rearview system according to any one of the preceding claims, wherein the control system (30) activates the turn signal indicator in addition to the second lighting sector light.

8. The exterior rearview system according to any one of the preceding claims, further comprising
a third lighting sector configured to project at least one arrow or chevron image onto the ground to the side of the vehicle and directed away therefrom, wherein the third lighting sector is operatively linked in the control system to activate in response to activation of the turn signal indicator function.

9. The exterior rearview system according to any one of the claims 1 to 8, further comprising
a third lighting sector which is directed forward for providing a daytime running light function and is operatively linked in the control system.

## Patentansprüche

1. Außenrückblicksystem (3, 46) für ein Fahrzeug, umfassend:
• ein Gehäuse, das dazu ausgelegt ist, an einer Außenseite (70a, 70b) eines Fahrzeugs (1, 40) angebracht zu werden, wobei das Gehäuse eine reflektierende Spiegelfläche und/oder einen Anzeigebildschirm trägt, um einem Fahrer ein Bild des Bereiches seitlich des und hinter dem Fahrzeug(s) anzuzeigen;
• ein oder mehrere Beleuchtungsmodule (5), die in dem Gehäuse angeordnet und daran befestigt sind und die mindestens einen ersten Beleuchtungssektor (L1 - L9) zum Realisieren eines Fahrtrichtungsanzeigers und mindestens einen zweiten Beleuchtungssektor (L1 - L9) zum Realisieren zusätzlicher Beleuchtung auf der Außenseite oder der Innenseite eines Fahrzeugs (1, 40) bereitstellt, wobei der zweite Beleuchtungssektor adaptiv gesteuert wird; und
• ein Steuersystem (30) zum Empfangen eines Dateninputs in Bezug auf:
(a) Fahrzeugstatusparameter von Fahrzeugstatussensoren (36); und
(b) die Umgebungsbedingungen des Fahrzeugs von Umgebungssensoren (34); und
(c) Intentionen eines Benutzers von einer Benutzerinputvorrichtung (38); und
zum adaptiven Aktivieren des zweiten Beleuchtungssektors (L1 - L9) als Reaktion auf den Dateninput,
wobei
der zweite Beleuchtungssektor ein adaptives Sicherheitslicht ist, das dazu ausgestaltet ist, als Reaktion auf den Dateninput, der durch das Steuersystem (30) von den Fahrzeugstatussensoren und den Umgebungssensoren empfangen wird, eine Nachricht oder eine Warnung anzuzeigen,
das Steuersystem (30) ferner eine Computersteuerung oder einen Prozessor (32) umfasst, zum Empfangen des Dateninputs von den Umgebungssensoren (34), die Fahrbahnbedingungen oder die Nähe eines benachbarten Fahrzeugs erfassen, und von den Fahrzeugstatussensoren (36), die Fahrzeugstatusparameter erfassen, und
die Benutzerinputvorrichtung (38) die tragbare Vorrichtung eines Benutzers ist,
**dadurch gekennzeichnet, dass** das System derart ausgelegt ist, dass die tragbare Vorrichtung mit einer Anwendung "in der Cloud" (39) kommuniziert und die "Cloud"-Anwendung dann mit der Steuerung (32) kommuniziert, um die Signale bezüglich der Intention des Benutzers zu liefern, wobei der zweite Beleuchtungssektor die Beleuchtung oder die Nachricht als Reaktion auf die Signale bezüglich der Intention des Benutzers anzeigt.

2. Außenrückblicksystem nach Anspruch 1, wobei
mindestens ein Beleuchtungsmodul (5) eine Mehrzahl von LEDs (D1 - D8) umfasst, die zum Bereitstellen verschiedener Beleuchtungsfunktionen in den Beleuchtungssektoren (L1 - L9) angeordnet sind.

3. Außenrückblicksystem nach Anspruch 1, wobei
mindestens ein Beleuchtungsmodul eine einzige Lichtquelle und einen Lichtleiter zum Leiten von Licht von der Lichtquelle zu einer oder mehreren Outputstellen umfasst.

4. Außenrückblicksystem nach einem der vorangehenden Ansprüche, wobei
das Steuersystem (30) die Farbe, Form, Intensität und/oder Zeitplanung der als Reaktion auf den Benutzerinput für den zweiten Beleuchtungssektor aktivierten Lichter steuert.

5. Außenrückblicksystem nach einem der vorangehenden Ansprüche, wobei
die Computersteuerung oder der Prozessor (32) den Dateninput von den Umgebungssensoren (34) in Bezug auf eine Identität des Benutzers empfängt.

6. Außenrückblicksystem nach Anspruch 5, wobei
der Input in Bezug auf die Identität des Benutzers ausgewählt ist aus Bilderkennung, Gestenerkennung, Schlüsselinputerkennung und Nähe einer erfassten Benutzervorrichtung.

7. Außenrückblicksystem nach einem der vorangehenden Ansprüche, wobei
das Steuersystem (30) zusätzlich zu dem Licht des zweiten Beleuchtungssektors den Fahrtrichtungsanzeiger aktiviert.

8. Außenrückblicksystem nach einem der vorangehenden Ansprüche, ferner umfassend einen dritten Beleuchtungssektor, der dazu ausgestaltet ist, mindestens ein Pfeil- oder Chevron- Bild auf den Boden seitlich des Fahrzeugs und davon weg weisend zu projizieren, wobei der dritte Beleuchtungssektor mit dem Steuersystem wirkverbunden ist, um als Reaktion auf die Aktivierung der Fahrtrichtungsanzeigerfunktion aktiviert zu werden.

9. Außenrückblicksystem nach einem der Ansprüche 1 bis 8, ferner umfassend einen dritten Beleuchtungssektor, der zum Bereitstellen einer Tagfahrlichtfunktion vorwärts gerichtet und mit dem Steuersystem wirkverbunden ist.

## Revendications

1. Système de rétroviseur extérieur de véhicule (3, 46) comprenant :
• un boîtier adapté pour être monté sur un côté extérieur (70a, 70b) d'un véhicule (1, 40), le boîtier contenant une surface de miroir réfléchissant et/ou un écran d'affichage pour afficher à un conducteur une image de la zone sur le côté et à l'arrière du véhicule ;
• un ou plusieurs modules d'éclairage (5) disposés dans ledit boîtier et fixés à celui-ci, et fournissant au moins un premier secteur d'éclairage (L1 - L9) pour mettre en oeuvre un indicateur de clignotant et au moins un deuxième secteur d'éclairage (L1 - L9) pour mettre en oeuvre un éclairage supplémentaire à l'extérieur ou à l'intérieur d'un véhicule (1, 40), le deuxième secteur d'éclairage étant commandé de manière adaptative ; et
• un système de commande (30) pour recevoir une entrée de données concernant :
(a) des paramètres d'état du véhicule provenant de capteurs d'état du véhicule (36) ; et
(b) les conditions environnementales du véhicule provenant de capteurs environnementaux (34) ; et
(c) les intentions d'un utilisateur provenant d'un dispositif d'entrée d'utilisateur (38) ; et pour activer de manière adaptative le deuxième secteur d'éclairage (L1 - L9) en réponse à l'entrée de données,
le deuxième secteur d'éclairage étant une lumière de sécurité adaptative conçue pour afficher un message ou une alerte en réponse à l'entrée de données reçue par le système de commande (30) en provenance des capteurs d'état du véhicule et des capteurs environnementaux,
le système de commande (30) incluant en outre un contrôleur informatique ou un processeur (32) pour recevoir l'entrée de données provenant des capteurs environnementaux (34) détectant des conditions routières ou la proximité d'un véhicule adjacent et provenant des capteurs d'état du véhicule (36) détectant des paramètres d'état du véhicule, et
le dispositif d'entrée d'utilisateur (38) étant un dispositif portable d'utilisateur,
**caractérisé en ce que** le système est adapté de telle sorte que le dispositif portable communique avec une application « dans le nuage » (39) et que l'application « dans le nuage » communique ensuite avec le contrôleur (32) pour délivrer les signaux d'intention de l'utilisateur, le deuxième secteur d'éclairage affichant l'éclairage ou le message en réponse aux signaux d'intention de l'utilisateur.

2. Système de rétroviseur extérieur selon la revendication 1, dans lequel au moins un module d'éclairage (5) contient une pluralité de DEL (D1 - D8) agencées dans les secteurs d'éclairage (L1 - L9) pour fournir différentes fonctions d'éclairage.

3. Système de rétroviseur extérieur selon la revendication 1, dans lequel au moins un module d'éclairage contient une source de lumière unique et un guide de lumière pour diriger la lumière de la source de lumière vers un ou plusieurs points de sortie.

4. Système de rétroviseur extérieur selon l'une quelconque des revendications précédentes, dans lequel
le système de commande (30) commande le couleur, la forme, l'intensité et/ou la synchronisation de lumières activées pour le deuxième secteur d'éclairage en réponse à l'entrée d'utilisateur.

5. Système de rétroviseur extérieur selon l'une quelconque des revendications précédentes, dans lequel
le contrôleur informatique ou processeur (32) reçoit l'entrée de données provenant des capteurs environnementaux (34) relative à une identité de l'utilisateur.

6. Système de rétroviseur extérieur selon la revendication 5, dans lequel l'entrée relative à l'identité de l'utilisateur est sélectionnée parmi la reconnaissance d'images, la reconnaissance de gestes, la reconnaissance de l'entrée des touches et la proximité d'un dispositif d'utilisateur détecté.

7. Système de rétroviseur extérieur selon l'une quelconque des revendications précédentes, dans lequel
le système de commande (30) active l'indicateur de clignotant en plus de la deuxième lumière de secteur d'éclairage.

8. Système de rétroviseur extérieur selon l'une quelconque des revendications précédentes, comprenant en outre
un troisième secteur d'éclairage conçu pour projeter au moins une image de flèche ou de chevron sur le sol à côté du véhicule et dirigée à l'écart de celui-ci, le troisième secteur d'éclairage étant lié de manière opérationnelle au système de commande pour s'activer en réponse à l'activation de la fonction d'indicateur de clignotant.

9. Système de rétroviseur extérieur selon l'une quelconque des revendications 1 à 8, comprenant en outre
un troisième secteur d'éclairage dirigé vers l'avant pour fournir une fonction d'éclairage de jour et relié de manière opérationnelle au système de commande.
